(19) **Europäisches Patentamt** / **European Patent Office** / **Office européen des brevets**

(11) **EP 1 184 917 B1**

(12) **EUROPEAN PATENT SPECIFICATION**

(45) Date of publication and mention of the grant of the patent:
**21.01.2009 Bulletin 2009/04**

(51) Int Cl.:
*H01M 2/16* *(2006.01)*      *H01M 10/40* *(2006.01)*

(21) Application number: **01119788.6**

(22) Date of filing: **28.08.2001**

(54) **Separator for non-aqueous electrolyte secondary battery, and non-aqueous electrolyte secondary battery**

Separator für einen Akkumulator mit nicht wässrigem Elektrolyt, und Akkumulator mit nicht wässrigem Elektrolyt

Séparateur pour batterie secondaire à électrolyte nonaqueux et batterie secondaire à électrolyte nonaqueux

(84) Designated Contracting States:
**DE FR GB IT NL**

(30) Priority: **30.08.2000 JP 2000260556**

(43) Date of publication of application:
**06.03.2002 Bulletin 2002/10**

(73) Proprietor: **Sumitomo Chemical Company, Limited**
**Tokyo 104-8260 (JP)**

(72) Inventors:
• **Shinohara, Yasuo**
**Niihari-gun,**
**Ibaraki (JP)**
• **Nishida, Yasunori**
**Tsubuka-shi,**
**Ibaraki (JP)**
• **Takahashi, Tsutomu**
**Tsukuba-gun,**
**Ibaraki (JP)**

(74) Representative: **Vossius & Partner**
**Siebertstraße 4**
**81675 München (DE)**

(56) References cited:
**EP-A- 0 718 901**      **EP-A- 0 794 583**
**EP-A- 0 924 780**      **US-A- 5 741 608**

**Description**

The present invention relates to a separator used for a non-aqueous electrolyte secondary battery and a non-aqueous electrolyte secondary battery.

In recent years, portable information instruments, such as a personal computer, a portable telephone and an information terminal, have been widely used. Since these instruments have various multimedia functions, it is therefore desirable that the secondary battery used for their power supply is small and light in weight having a large capacity, namely, a high energy density. In these points, aqueous solution type secondary batteries, such as a conventional lead storage battery and a nickel cadmium storage battery, are not sufficient. Lithium secondary batteries which can realize a higher energy density, especially lithium secondary batteries using as a cathode active material, a composite oxide of lithium, such as lithiated cobalt dioxide, lithiated nickel dioxide, and spinel lithium manganese oxide, and as an anode active material, a carbonaceous material that can be doped/undoped with a lithium ion, have been developed actively.

Since these lithium secondary batteries have inherently a large energy, improved safety is required against exothermal abnormalities, such as an internal short circuit and an external short circuit. For example, when heat generation occurs in a separator comprising a polyolefin microporous layer, the polyolefin layer is made to have a less porous structure at about 80°C - 180°C, and to form a structure in which lithium ions are not passed and the current of the battery is stopped, thus the safety is improved. (Hereafter, "a microporous layer, such as a polyolefin layer, which forms a less porous structure at a time of heat generation and stops the current of a battery" may be referred to as "having a shut-down function"). However, when heat generation is still large, there is a problem that the separator itself is deformed.

Preparation of separators have been studied by combining a microporous material mainly comprising polyolefin as a shut-down layer with a heat-resistant porous material. For example, JP-A 11-144697 describes a separator comprising a polyolefin porous film and a polyimide porous film. But there is the problem that the electrochemical oxidation of the heat-resistant porous material occurs during charging/discharging in a non-aqueous electrolyte secondary battery.

The object of the present invention is to provide a separator for a non-aqueous electrolyte secondary battery containing a heat-resistant microporous layer, which has a shut-down function and excellent electrochemical oxidation resistance, and a non-aqueous electrolyte secondary battery containing the separator.

The present inventors have found that the above object can be achieved by using a separator containing a layer having a shut-down function, and a heat-resistant microporous layer, said separator further having a spacer on the surface of the heat-resistant microporous layer.

The present invention relates to a separator for a non-aqueous electrolyte secondary battery according to independent claim 1. The separator comprises a shut-down layer, a heat-resistant microporous layer, and a spacer on the surface of the heat-resistant microporous layer, and the spacer has the form of particles, fibers, net or porous film. The spacer is disposed on the surface side of the heat-resistant microporous layer opposite the side where the shut-down layer is disposed. (Hereinafter, said surface side may be referred to as an external surface.)

Moreover, the present invention relates to a non-aqueous electrolyte secondary battery including the above separator.

The separator for a non-aqueous electrolyte secondary battery of the present invention is characterized by containing a shut-down layer and a heat-resistant porous layer, wherein said separator has a spacer having the form of particles, fibers, net or porous film. In the separator of the present invention, the heat-resistant porous layer consists of a heat-resistant resin, and is suitably adjacent to the shut-down layer.

The shut-down layer of the present invention is not especially limited as long as it has a shut-down function, and it is usually a microporous layer comprising a thermoplastic resin.

As the size of the pore (vacant space) in the shut-down layer, when said pore can be regarded approximately as a spherical form, the diameter of the sphere (hereinafter, it may be referred to as a pore diameter) is preferably 3 $\mu$m or less, and more preferably 1 $\mu$m or less. If the average size of the pore diameter exceeds 3 $\mu$m, the problem of short circuiting may easily occur when the carbon powder or the bit which is the main component of a cathode or an anode drops out. As for the size of pores, as long as either one of those of the heat-resistant porous layer or the shut-down layers satisfies the above-mentioned conditions, and the other one may be over 3 $\mu$m.

The pore rate (percentage of pores) of the shut-down layer is preferably 30 to 80 volume %, and more preferably 40 to 70 volume %. When the pore rate is less than 30 volume %, the retention amount of an electrolyte may decrease. When the pore rate is more than 80 volume%, the strength of the shut-down layer may become insufficient, and the shut-down function may deteriorate sometimes.

The thickness of the shut-down layer is preferably 3 to 30 $\mu$m, and more preferably 5 to 20 $\mu$m. When the thickness is less than 3 $\mu$m, the shut-down function may be insufficient. When the thickness is more than 30 $\mu$m, the thickness including that of the heat resistant porous layer becomes too thick as a separator for a non-aqueous electrolyte secondary battery to obtain a high electric capacity.

It is preferable that the shut-down layer serves as a layer that is substantially non-porous at a temperature of 80° C to 180°C

The thermoplastic resin for the shut-down layer is preferably a thermoplastic resin which softens at 80-180 °C to block the pores and does not dissolve in an electrolyte. Specifically, a polyolefin, a thermoplastic polyurethane, etc. are exemplified. The polyolefin is more preferably is at least one thermoplastic resin selected from the group consisting of polyethylene, such as low-density polyethylene, high-density polyethylene, and ultra-high molecular weight polyethylene; polypropylene, and the like.

The heat-resistant resin which forms the heat-resistant porous layer is preferably at least one heat-resistant resin selected from resins having a temperature of deflection under load according to JIS K 7207 measured at 18.6kg/cm$^2$ load of 100° C or more. In order to be safer under even severer use at high temperatures, the heat-resistant resin of the present invention, is more preferably at least one heat-resistant resin selected from resins having a temperature of deflection under load of 200°C or more.

Examples of the resins having a temperature of deflection under load of 100° C or more include polyimide, polyamideimide, aramid, polycarbonate, polyacetal, polysulfone, polyphenyl sulfide, polyetherether ketone, aromatic polyester, polyether sulfone, polyether imide, etc. Examples of the resins having a temperature of deflection under load of 200° C or more include polyimide, polyamideimide, aramid, polyethersulfone, polyether imide, etc. Furthermore, it is especially preferable to select the heat-resistant resin from the group consisting of polyimide, polyamideimide and aramid.

Moreover, the heat-resistant resin preferably has a limiting oxygen index of 20 or more. The limiting oxygen index is a minimum oxygen concentration at which a test piece put into a glass pipe can continue burning. The heat-resistant porous layer is preferably flame retardant in addition to heat resistant in view of oxygen generation from the cathode material at high temperatures. As a concrete example of such a resin, the above-mentioned heat-resistant resins are exemplified.

The pore size or pore diameter of the above-mentioned heat-resistant porous layer, is preferably 3 μm or less, and more preferably 1 μm or less. If the average pore size or pore diameter exceeds 3 μm, the problem of short circuiting may easily occur when the carbon powder or the bit which is the main component of a cathode or an anode drops out.

The pore rate of the heat-resistant porous layer is preferably 30 to 80 volume %, and more preferably 40 to 70 volume %. When the pore rate is less than 30 volume %, the retention amount of electrolyte may decrease. When the pore rate is more than 80 volume%, the strength of the heat-resistant porous layer may become insufficient.

In view of the safety proof property of the heat-resistant porous layer, the thickness of the heat-resistant porous layer is preferably 2 to 30 μm, more preferably 3 to 30 μm. When the thickness is more than 30 μm, the thickness including that of the shut-down layer becomes too thick as a separator for a non-aqueous electrolyte secondary battery to obtain a high electric capacity.

The separator for a non-aqueous electrolyte secondary battery of the present invention has a spacer disposed on the external surface of the heat-resistant porous layer. The spacer has the form of particles, fibers, net or porous film, and suitably comprises an electrochemically stable substance.

The spacer is preferably an electrochemically stable organic polymer, in view of low price and light weight. The organic polymer can include an electrochemically stable inorganic compound. Moreover, the shut-down function can be also imparted to the spacer by using a thermoplastic resin which softens at 80°C to 180°C. Although the shut-down temperature is higher than the operating temperature of the battery, it is preferable for it to be lower in view of the safety of the battery, and thermoplastic resins which soften at 80°C to 140°C can preferably be used.

In view of the electric capacity and the load characteristic of the battery, the thickness of the spacer is preferably as thin as possible, 0.02 μm to 5 μm, and most preferably 0.02 μm to 3 μm.

Here, the thickness of the spacer means the difference of the film thickness before and after providing a spacer to the external surface of the heat-resistant microporous layer. The thickness of a film is measured according to JIS K 7130.

The spacer is in the form of particles, fibers, net or porous film. For example, a spacer having the form of fibers can be produced by arranging fibers comprising an organic polymer on a surface of the heat-resistant microporous layer.

A spacer having the form of a net can be produced by adhering an organic polymer in the form of a mesh to a surface of the heat-resistant microporous layer. A spacer having the form of a porous film can be produced by adhering a non-woven fabric or microporous film comprising an organic polymer to a surface of the heat-resistant microporous layer. A spacer having the form of particles can be produced, for example, by coating and drying a suspension containing organic fine particles on a surface of the heat-resistant microporous layer. Among them, the spacer having the form of particles is industrially preferable, since a thin spacer can be manufactured easily.

Especially, in a process of coating a suspension containing organic fine particles, the particles will be arranged as at least one layer on the surface of the heat-resistant porous layer. Supposing that particles having a diameter of 3 μm are arranged as one layer, the thickness of the spacer will be 3 μm. The particles do not need to be coated on the whole surface of the heat-resistant porous layer,and the particles do not need to be closely adjacent to each other.

The diameter of the particles is preferably 3 μm or less. If the diameter exceeds 3 μm, the thickness of the spacer will exceed 3 μm, and the electric capacity or the load characteristic of the battery may be sometimes be decreased. It is also possible to use two or more kinds of particles having different diameters. In order to prevent aggregation of the particles, it is preferable to mix two or more kinds of particles having different diameters.

Generally in a non-aqueous electrolyte secondary battery, a cathode sheet and an anode sheet are laminated with an interposing separator and rolled up spirally to form a rolled electrode. In the rolling up process, a part of the separator is first wound round a center core, and then, a cathode sheet and an anode sheet are supplied and rolled up while interposing the separator. Thus, the produced rolled electrode needs to be drawn out from the center core, but if the surface sliding property of the separator in contact with the center core is not sufficient, then an undue force is applied to the rolled electrode which may cause misalignment and unevenness in the electrode, and sometimes, breakage of the electrode may be caused.

As the center core, stainless steel is conventionally used, and it is preferred that the friction coefficient of the separator to stainless steel is low. The static friction coefficient between the spacer-disposed separator and stainless steel whose surface is ground by a 1000 grit polishing paper, is measured according to JIS K7125. It is preferably 0.5 or less, and more preferably 0.3 or less.

When forming a spacer having the form of particles, fibers, net or porous film, the spacer does not necessarily need to completely cover the surface of the heat-resistant porous layer.

Moreover, the degree of opening of the spacer having the form of particles, fibers, net or porous film is desirably large, in order to obtain excellent load characteristic with the battery.

Examples of the process for forming a spacer having the form of particles, fibers, net or porous film on the external surface of a heat-resistant porous layer include: laminating a non-woven fabric, a woven fabric, or a porous film on the external surface of the heat-resistant porous layer; forming a non-woven fabric on the external surface of the heat-resistant porous layer by a direct melt blow method, etc.; coating a polymer solution which may form a porous film, and the like.

The pore ratio of the shut-down layer or the heat-resistant porous layer is determined as follows.

A heat-resistant porous layer is cut into a square of 10 cm, and the weight (Wg) and thickness (Dcm) are measured. The weight of the material in the sample is calculated, and the weight of each material (Wi) is divided by its true specific gravity to determine the volume of each material, and the pore ratio (volume %) is determined from the following formula.

$$\text{Pore ratio (volume \%)} = [1 - \{(W1/\text{true specific gravity 1}) + (W2/\text{true specific gravity 2}) + \cdots + (Wn/\text{true specific gravity n})\}/(100 \times D)] \times 100$$

Examples of the electrochemically stable substances used for the spacer in the present invention include a substance which is molded into a porous film and used as a separator for a lithium ion battery, but it is not deteriorated after being retained while applying a voltage of 4.2-4.5V for a long time.

Among them, preferred examples are organic polymers selected from the group consisting of: a polyolefin such as polyethylene and polypropylene; a polyolefin copolymer; a fluorine-containing polymer such as tetrafluoroethylene-hexafluoropropylene copolymer and polytetrafluoroethylene; a polycarbonate; an aromatic polyester; a polyethylene terephthalate; and celluloses such as carboxymethylcellulose and carboxyethylcellulose; or organic polymers thereof containing an electrochemically stable inorganic compound.

A fluorine-containing polymer such as tetrafluoroethylene-hexafluoropropylene copolymer and polytetrafluoroethylene and a cellulose such as carboxymethylcellulose are preferred. The organic polymers thereof containing an electrochemically stable inorganic compound are also preferred, since an inorganic compound which can withstand a voltage which an organic substance cannot withstand can be used.

The separator in which a spacer is formed by coating an application liquid containing an electrochemically stable substance on the external surface of a heat-resistant porous layer is preferable from an industrial viewpoint, since the spacer is easily formed. Especially, to provide a spacer having the form of particles on the external surface of a heat-resistant porous layer, it is preferable that the application liquid is a suspension, since the thickness of the spacer can be made thin. Here, as the suspension, the suspension containing particles of an organic polymer is exemplified.

In the present invention, either of the heat-resistant porous layer, the shut-down layer and the spacer may contain an inorganic compound. The inorganic compound contained in a spacer may be just a high order metal oxide having electrochemical-oxidation resistance, and being inactive to an electrolyte. Aluminum oxide, calcium carbonate, silica, etc. are exemplified, but the present invention is not limited to these.

In the separator for a non-aqueous electrolyte secondary battery of the present invention, each layer may be simply piled on top of another, but in view of handling property, they are preferably bonded. The layers, for example, the shut-down layer to the heat-resistant porous layer, and the heat-resistant porous layer to the spacer, can be bonded by adhesive, by heat adhering, etc. for example.

As for the separator of the present invention, examples of the process of coating an application liquid which contains an electrochemically stable substance on the external surface of a heat-resistant porous layer, and forming a spacer, are shown hereafter, but the present invention is not limited to these.

For example, a spacer can be formed on the external surface of a heat-resistant porous layer by a method comprising steps (a) - (c).

(a) Preparing a suspension liquid comprising an electrochemically stable substance. When using an inorganic compound, a slurry liquid comprising a fine powdery inorganic compound is prepared, and mixed with the suspension liquid.
(b) Coating the suspension liquid on a heat-resistant porous layer, and forming an application layer.
(c) Drying the application layer.

Moreover, a suitable piling method of the shut-down layer and the heat-resistant porous layer is a piling process in which a microporous layer such as a porous film which is either a heat-resistant porous layer or a shut-down layer is used as a substrate, a solution layer is formed on the substrate by coating the other layer as a solution and removing the solvent.

Examples of manufacture methods using a method of coating a heat-resistant resin solution and forming this heat-resistant porous layer on a shut-down layer are shown below, but the present invention is not limited to these.

For example, a heat-resistant porous layer can be formed on a shut-down layer by a method comprising steps (A) - (E).

(A) Preparing a solution comprising a heat-resistant resin and an organic solvent. When using an inorganic compound, a slurry liquid comprising a fine powdery inorganic compound in an amount of 1 to 200 parts by weight based on 100 g of the heat-resistant resin is prepared.
(B) Coating the suspension liquid or the slurry liquid on a shut-down layer, and forming an application film.
(C) Depositing the heat-resistant resin in the application film.
(D) Removing the organic solvent from the application film.
(E) Drying the application film.

Here, as the organic solvent, a polar organic solvent is usually used. As the polar organic solvent, for example, N,N-dimethylformamide, N,N-dimethylacetamide, N-methyl-2-pyrrolidone (hereinafter referred to as NMP), tetramethyl urea, or the like are exemplified.

The non-aqueous electrolyte secondary battery of the present invention is characterized by containing the separator described above.

In the non-aqueous electrolyte secondary battery of the present invention, a separator in which the spacer is placed adjacent to the cathode is preferable, since the heat-resistant porous layer adjacent to the spacer is hardly oxidized electrochemically.

Components other than the separator of the non-aqueous electrolyte secondary battery are explained below, but they are not limited to these.

As the nonaqueous electrolyte solution used in the non-aqueous electrolyte secondary battery of the present invention, for example, a nonaqueous electrolyte solution dissolving a lithium salt in an organic solvent can be used. As the lithium salt, exemplified are $LiClO_4$, $LiPF_6$, $LiAsF_6$, $LiSbF_6$, $LiBF_4$, $LiCF_3SO_3$, $LiN(CF_3SO_2)_2$, $LiC(CF_3SO_2)_3$, $Li_2B_{10}Cl_{10}$, a lithium salt of lower aliphatic carboxylic acid, $LiAlCl_4$, etc. either alone or a mixture in combination of two or more thereof. Among them, it is preferable to use at least one containing fluorine selected from the group consisting of $LiPF_6$, $LiAsF_6$, $LiSbF_6$, $LiBF_4$, $LiCF_3SO_3$, $LiN(CF_3SO_2)_2$ and $LiC(CF_3SO_2)_3$.

As the organic solvent used in the nonaqueous electrolyte solution of the present invention, for example, can be used : carbonates such as propylene carbonate, ethylene carbonate, dimethyl carbonate, diethyl carbonate, ethylmethyl carbonate, 4-trifluoromethyl-1,3-dioxolane-2-one, and 1,2-di(methoxy carbonyloxy)ethane; ethers such as 1,2-dimethoxyethane, 1,3-dimethoxypropane, pentafluoropropylmethylether, 2,2,3,3-tetrafluoropropyl difluoromethylether, tetrahydrofuran and 2-methyltetrahydrofuran; esters such as methylformate, methyl acetate, and γ-butyrolactone; nitriles such as acetonitrile, and butyronitrile; amides such as N,N-dimethylformamide, and N,N-dimethyl acetamide; carbamates such as 3-methyl-2-oxazolidone; sulfur containing compounds such as sulfolane, dimethyl sulfoxide, and 1,3-propane sultone; and the above solvents having introduced fluorine substituents. Usually, the above organic solvent can be used, with mixing two or more of these.

Among them, a mixed solvent containing a carbonate is preferred, and a mixed solvent comprising a cyclic carbonate and a non-cyclic carbonate or a cyclic carbonate and an ether are still preferred. As a mixed solvent of a cyclic carbonate and a non-cyclic carbonate, the mixed solvent comprising ethylene carbonate, dimethyl carbonate, and ethyl methyl carbonate is preferred due to the wide temperature range of operation, excellent load characteristic s, and low decomposition properties, even when a graphite material such as natural graphite and artificial graphite, is used as an active material for the anode.

A cathode sheet used in the present invention is a sheet in which a composition containing a cathode active material, a conductive substance and a binder is supported on a current collector. Concretely, those which contain a material that can be doped/undoped with a lithium ion as the cathode active material, a carbonaceous material as a conductive substance, and a thermoplastic resin etc. as a binder can be used. Examples of the material that can be doped/undoped with a lithium ion, are lithium composite oxides containing at least one sort of transition metal , such as V, Mn, Fe, Co, Ni and the like.

Among them, preferred examples in view of the high average discharging electric potential are: a layered lithium compound oxide having an $\alpha$-NaFeO$_2$ type structure as a matrix such as lithiated nickel dioxide and lithiated cobalt dioxide; and a lithium compound oxide having a spinel type structure as a matrix, such as, spinel lithium manganese oxide.

The lithium composite oxide may also contain various added elements, such as Ti, V, Cr, Mn, Fe, Co, Cu, Ag, Mg, Al, Ga, In and Sn. Especially when a composite lithiated nickel dioxide containing at least one of the above metals is used in an amount so that the above metal is present at 0.1-20% by mole, to the sum of the moles of the above metal and the moles of Ni in the lithiated nickel dioxide, the cycling property is improved during use at high capacity, and this is preferred.

Examples of thermoplastic resins as the binder include poly (vinylidene fluoride), copolymer of vinylidene fluoride, polytetrafluoroethylene, copolymer of tetrafluoroethylene-hexafluoropropylene, copolymer of tetrafluoroethylene-perfluoroalkyl vinyl ether, copolymer of ethylene-tetrafluoroethylene, copolymer of vinylidenefluoride-hexafluoropropylene-tetrafluoroethylene, thermoplastic polyimide, carboxymethylcellulose, polyethylene, polypropylene, and the like.

Examples of carbonaceous materials as the conductive substance include natural graphite, artificial graphite, cokes, carbon black, and the like. The conductive substance can be used alone, and a composite conductive substance such as, for example, a mixture of artificial graphite and carbon black, can be used as well.

As the anode sheet in the present invention, for example, a material that can be doped/undoped with lithium ion, lithium metal, or lithium alloy can be used. Examples of the material that can be doped/undoped with lithium ion include: carbonaceous material, such as natural graphite, artificial graphite, cokes, carbon black, pyrolytic carbons, carbon fiber, and fired products of organic polymer; chalcogen compounds such as oxides or sulfides which perform doping/undoping of lithium ion at an electric potential lower than the cathode. As the carbonaceous material, a carbonaceous material comprising a graphite material, such as natural graphite and artificial graphite as a main component is preferred, from the point of view that a large energy density is obtained when it is combined with a cathode, since the potential flatness is high, and the average discharge electric potential is low.

As the anode current collector used by the non-aqueous electrolyte secondary battery of the present invention, Cu, Ni, stainless steel, etc. can be used. Especially in a lithium secondary battery, Cu is preferable, since it hardly forms an alloy with lithium and it is easy to process into a thin film. As a process for supporting the composition containing an anode active material on the anode current collector, exemplified are: a method of carrying out press molding; and a method comprising the steps of making paste using a solvent, coating on a current collector, drying, and press bonding.

The lithium secondary battery of the present invention is not particularly limited in shape and may have any one of the shapes such as a paper-sheet shape, a coin-like shape, a cylindrical shape and a rectangular parallelepiped shape.

EXAMPLES

Hereafter, although the present invention is explained by the examples in detail, the present invention is not limited to these at all.

(1) Inherent viscosity

The flow time was measured at 30°C with a capillary viscometer, with respect to 96 to 98% sulfuric acid and a solution obtained by dissolving 0.5 g of para-aramid polymer in 100 ml of 96 to 98% sulfuric acid. The inherent viscosity was then calculated from the ratio of the observed flow time according to the equation given below:

$$\mathtt{Inherent\ Viscosity\ =\ ln(T/T_0)/C\ [unit:\ dl/g]}$$

where T and $T_0$ denote the flow time of the sulfuric acid solution of para-aramid and sulfuric acid, respectively, and C represents the para-aramid concentration (g/dl) in the sulfuric acid solution of para-aramid.

(2) Gas permeability

Gas permeability was measured according to JIS P 8117.

(3) Film thickness

Film thickness was measured according to JIS K 7130.

(4) Static friction coefficient

The static friction coefficient of the film to stainless steel whose surface was ground by a 1000 grit polishing paper was measured according to JIS K7125.

(5) Load characteristics of the battery

In order to evaluate the performance of a battery using the separator, a plate battery was prepared as described below, and the load characteristics were measured.

In NMP, 3 parts by weight of poly(vinylidene fluoride) were dissolved, 9 parts by weight of artificial graphite powder and 1 part by weight of acetylene black as conductive substances, and 87 parts by weight of lithiated cobalt dioxide powder as a cathode active material were dispersed and kneaded to provide a cathode composition paste. This paste was coated on aluminum foil at a thickness of 20 $\mu$m, which is a current collector, dried and pressed by a roll to obtain a cathode sheet electrode.

This cathode sheet and lithium metal as an anode are piled so that the separator is placed adjacent to the cathode sheet through the separator coated with the spacer. A plate battery was produced by adding an electrolyte in which 1M LiPF$_6$ was dissolved to a mixed solvent of 30 volume % ethylene carbonate, 35 volume % ethylmethyl carbonate, and 35 volume % dimethyl carbonate.

Using the resultant plate battery, constant current/constant voltage charging and constant current discharging was carried out under the following conditions, and the load characteristics of the battery were evaluated.

The load characteristics are represented by the value defined by "(Discharging capacity of charging/discharging X) / (Discharging capacity of charging/discharging Y)".

In the above, the conditions of charging/discharging X are:

maximum charging voltage: 4.3V
charging time: 8 hours
charging current: 0.5mA/cm$^2$
minimum discharging voltage: 3.0V, and
discharging current: 0.5mA/cm$^2$**.**

The conditions of charging/discharging Y are:

maximum charging voltage: 4.3V
charging time: 8 hours
charging current: 0.5mA/cm$^2$
minimum discharging voltage: 3.0V, and
discharging current: 10mA/cm$^2$.

(6) Evaluation of electrochemical oxidation resistance

In the same manner as the evaluation of load characteristics of the battery, a plate battery was prepared, and constant current and constant voltage charging was conducted under the following conditions.

maximum charging voltage: 4.5V
charging time: 24 hours, and
charging current: 0.5mA/cm$^2$.

After the charging, the battery was disassembled, and the separator was taken out and observed.

Example 1

1. Application of a heat-resistant porous layer, and production of a separator

(1) Synthesis of para-aramid solution

Poly(para-phenylene terephthalamide) (hereinafter referred to as PPTA) was synthesized in a 5-liter separable flask equipped with an agitating blade, a thermometer, a nitrogen flow-in pipe, and a powder inlet. In the sufficiently dried flask , 272.65 g of calcium chloride dried at 200°C for two hours were added to 4200 g of NMP. The flask was then heated to 100°C . The flask was cooled down to room temperature after complete dissolution of calcium chloride, and 132.91 g of para-phenylene diamine (hereinafter referred to as PPD) were added and completely dissolved. While the solution was kept at the temperature of 20±2°C, 243.32 g of terephthalic acid dichloride (hereinafter referred to as TPC) were added in ten portions at approximately 5 minutes intervals. The solution was kept at a temperature of 20±2°C for one hour for maturation and then stirred under reduced pressure for 30 minutes for elimination of air bubbles. The polymer solution obtained showed optical anisotropy. A part of the polymer solution was sampled, and polymer was taken from the sampled polymer solution re-precipitated in water. The observed inherent viscosity of the PPTA thus obtained was 1.97 dl/g.

Then, 100 g of the polymer solution was added to a 500 ml separable flask with an agitating blade, a thermometer, a nitrogen flow-in pipe, and a powder inlet, and NMP solution was added gradually. Finally, PPTA solution having a PPTA concentration of 2.0 % by weight was prepared and is referred to as "P solution".

(2) Application of a para-aramid solution and production of a separator

As a shut-down layer, a porous film of polyethylene (film thickness of 25 $\mu$m, gas permeability of 700 sec/100 cm$^3$(cc), average pore radius of 0.04 $\mu$m (mercury porosimetry))was used. A film-like material of "P solution" which is a heat resistant resin solution was coated on the porous film put on a glass plate with a bar coater (clearance 200 $\mu$m: produced by Tester Sangyo Co., Ltd.). After keeping this as it was, in a draft in a laboratory, for about 3 minutes, PPTA was precipitated and a clouded film-like material was obtained. The film-like material was immersed in ion-exchange water. After 5 minutes, the film-like material was peeled off from the glass plate. After washing the material sufficiently with a flow of ion-exchange water, the free water was wiped away. The film-like material was sandwiched in Nylon sheet, and further in felt made of aramid. As in the state that the film-like material was sandwiched in Nylon sheet, and felt made of aramid, an aluminum plate was put on, a Nylon film was covered thereon, the Nylon film and the aluminum plate were sealed with gum, and a pipe for reducing pressure was attached. The whole was put in a heating oven, and the film-like material was dried with reducing pressure at 60°C, and a composite film comprising a porous film of polyethylene and a porous layer of aramid (thickness 5$\mu$m) was obtained.

2. Evaluation of shut-down function

The produced composite film was cut into a 40 mm square, sandwiched between electrodes made of stainless steal each having 18mm$\phi$ and 90mm square. A test battery was produced by adding an electrolyte in which 1M of LiPF$_6$ was dissolved to a mixed solvent of 30 volume % ethylene carbonate, 35 volume % ethylmethyl carbonate, and 35 volume % dimethyl carbonate. Applying a voltage of 1V at 1kHz between the electrodes, the electric resistance of the test battery was measured. The test battery was placed in an electric oven, and the temperature was raised at a rate of 2° C/minute from 25° C to 200°C, with measuring electric resistance. In this process, the temperature at which electric resistance increases was observed as the shut-down actuation temperature.

The electric resistance at 25°C was 20$\Omega$. When the temperature of the battery was raised, the electric resistance value rose abruptly near 140 °C to show 10k$\Omega$. It was confirmed that the shut-down function actuates for this sample.

3. Application of a spacer

The composite film produced in Example 1, Section 1, was placed on a glass plate, a polypropylene suspension [product of Mitsui Chemicals Inc.; Chemipearl WP100, particle diameter of 1$\mu$m (measured by coal tar counter method)] the solid concentration of which had been adjusted to 20% by adding ion-exchanged water, was coated on the surface of the aramid porous layer side, with a bar coater (clearance 10$\mu$m: produced by Tester Sangyo Co., Ltd.), and dried in air. The thickness of the spacer was 1$\mu$m.

The evaluation results of the separator are shown in Table 1.

Example 2

The composite film produced in Example 1, Section 1, was placed on a glass plate, a polyethylene suspension [product of Mitsui Chemicals Inc.; Chemipearl W950, particle diameter of 0.6 $\mu$m (measured by coal tar counter method)] the solid concentration of which had been adjusted to 20% by adding ion-exchanged water, was coated on the surface of the aramid porous layer side, with a bar coater (clearance 10 $\mu$m: produced by Tester Sangyo Co., Ltd.), and dried in air. The thickness of the spacer was 1 $\mu$m,

The evaluation results of the separator are shown in Table 1.

Example 3

The composite film produced in Example 1, Section 1, was placed on a glass plate, a suspension produced by mixing a polyethylene suspension [product of Mitsui Chemicals Inc.; Chemipearl W950, particle diameter of 0.6 $\mu$m (measured by coal tar counter method)] and a suspension of tetrafluoroethylene-hexafluoropropylene copolymer [product of Daikin Industries Ltd.; ND-1, particle diameter of 0.1-0.25 $\mu$m ] in a solid ratio of 2:1, and the solid concentration of which had been adjusted to 20% by adding ion-exchanged water, was coated on the surface of the aramid porous layer side with a bar coater (clearance 10 $\mu$m: produced by Tester Sangyo Co., Ltd.), and dried in air. The thickness of the spacer was 1 $\mu$m.

The evaluation results of the separator are shown in Table 1.

Example 4

The composite film produced in Example 1, Section 1, was placed on a glass plate. A carboxymethylcellulose [product of Dai-ichi Kogyo Seiyaku Co., Ltd.; Cellogen 4H] was dissolved in ion-exchanged water, and alumina fine powder [product of Nippon Aerosil Co., Ltd.; Alumina C, particle diameter of 0.013 $\mu$m] were dispersed therein, then the solid concentration was adjusted to 1.5% by adding ion-exchanged water. The solution was coated on the surface of the aramid porous layer side, and dried in air. The thickness of the spacer was 1 $\mu$m.

The evaluation results of the separator are shown in Table 1.

Comparative Example 1

A composite film of Example 1, section 1 was evaluated without forming a spacer. The evaluation results of the separator are shown in Table 1.

Table 1

|  | Electrochemical oxidation resistance | Load characteristic | Static friction coefficient |
|---|---|---|---|
| Example 1 | No color change | 52% | 0.40 |
| Example 2 | No color change | 58% | 0.41 |
| Example 3 | No color change | 68% | 0.19 |
| Example 4 | No color change | 68% | 0.44 |
| Comparative Example 1 | Color change | 69% | 0.59 |

The separator for a non-aqueous electrolyte secondary battery of the present invention has a shut-down function and heat-resistance, and excellent electrochemical oxidation resistance as well. Even if heat generation occurs by accident, it is possible to suppress the heat generation under a certain amount, and a battery having improved safety can be obtained. The battery using the separator of the present invention has excellent properties as a battery, and the separator can be produced easily by forming a spacer by an application method, the industrial value is large.

**Claims**

1. A separator for a non-aqueous electrolyte secondary battery, wherein the separator comprises a shut-down layer, a heat-resistant microporous layer, and a spacer having the form of particles, fibers, net or porous film on the surface of the heat-resistant microporous layer, wherein the heat-resistant microporous layer comprises at least one heat-resistant resin selected from the group consisting of polyimide, polyamideimide aramid, polycarbonate, polyacetal, polysulfone, polyphenyl sulfide, polyetherether ketone, aromatic polyester, polyether sulfone, and polyether imide, and

wherein the spacer comprises an electrochemically stable substance which is not deteriorated after being retained while applying a voltage of 4.2-4.5V, and wherein the thickness of the spacer is 0.02 to 5μm.

2. The separator for a non-aqueous electrolyte secondary battery according to claim 1, wherein the electrochemically stable substance is an electrochemically stable organic polymer, or an electrochemically stable organic polymer containing an electrochemically stable inorganic compound.

3. The separator for a non-aqueous electrolyte secondary battery according to claim 1, wherein the spacer has the form of particles and the particle diameter is 3 μm or less.

4. The separator for a non-aqueous electrolyte secondary battery according to claim 1, wherein the spacer is formed by coating an application liquid containing an electrochemically stable substance on the surface of the heat-resistant microporous layer.

5. The separator for a non-aqueous electrolyte secondary battery according to claim 4, wherein the application liquid is a suspension.

6. The separator for a non-aqueous electrolyte secondary battery according to claim 1 or 2, wherein the electrochemically stable substance is an organic polymer selected from the group consisting of a polyolefin, a polyolefin copolymer, a fluorine-containing polymer, a polycarbonate, an aromatic polyester, a polyethylene terephthalate and a cellulose.

7. A non-aqueous electrolyte secondary battery including the separator for a non-aqueous electrolyte battery according to any one of claims 1 to 6.

8. The non-aqueous electrolyte secondary battery according to claim 7, wherein the spacer is adjacent to a cathode.

**Patentansprüche**

1. Separator für einen Akkumulator mit nicht wässrigem Elektrolyt, wobei der Separator eine Abschaltschicht, eine hitzebeständige mikroporöse Schicht und einen Spacer in Form von Partikeln, Fasern, einem Gewebe oder einem porösen Film auf der Oberfläche der hitzebeständigen mikroporösen Schicht umfasst, wobei die hitzebeständige mikroporöse Schicht mindestens ein hitzebeständiges Harz umfasst, ausgewählt aus Polyimid, Polyamidimid, Aramid, Polycarbonat, Polyacetal, Polysulfon, Polyphenylsulfid, Polyetheretherketon, aromatischem Polyester, Polyethersulfon und Polyetherimid, und wobei der Spacer eine elektrochemisch stabile Substanz umfasst, welche nicht verschlechtert wird, nachdem sie während des Anlegens einer Spannung von 4,2 - 4,5 V beibehalten wurde, und wobei die Dicke des Spacers 0,02 bis 5 μm beträgt.

2. Separator für einen Akkumulator mit nicht wässrigem Elektrolyt gemäß Anspruch 1, wobei die elektrochemisch stabile Substanz ein elektrochemisch stabiles organisches Polymer oder ein elektrochemisch stabiles, eine elektrochemisch stabile anorganische Verbindung enthaltendes organisches Polymer ist.

3. Separator für einen Akkumulator mit nicht wässrigem Elektrolyt gemäß Anspruch 1, wobei der Spacer die Form von Partikeln hat und der Partikeldurchmesser 3 μm oder weniger beträgt.

4. Separator für einen Akkumulator mit nicht wässrigem Elektrolyt gemäß Anspruch 1, wobei der Spacer durch Auftragen einer eine elektrochemisch stabile Substanz enthaltenden Beschichtungsflüssigkeit auf die Oberfläche der hitzebeständigen mikroporösen Schicht gebildet wird.

5. Separator für einen Akkumulator mit nicht wässrigem Elektrolyt gemäß Anspruch 4, wobei die Beschichtungsflüssigkeit eine Suspension ist.

6. Separator für einen Akkumulator mit nicht wässrigem Elektrolyt gemäß Anspruch 1 oder 2, wobei die elektrochemisch stabile Substanz ein aus einem Polyolefin, einem Polyolefincopolymer, einem Fluor enthaltenden Polymer, einem Polycarbonat, einem aromatischen Polyester, einem Polyethylenterephthalat und einer Cellulose ausgewähltes organisches Polymer ist.

**7.** Akkumulator mit nicht wässrigem Elektrolyt, beinhaltend den Separator für eine Batterie mit nicht-wässrigem Elektrolyt gemäß einem der Ansprüche 1 bis 6.

**8.** Akkumulator mit nicht wässrigem Elektrolyt gemäß Anspruch 7, wobei der Spacer benachbart zu einer Kathode ist.

**Revendications**

**1.** Séparateur pour une batterie secondaire à électrolyte non aqueux, le séparateur comprenant une couche d'arrêt, une couche microporeuse thermorésistante, et un espaceur étant sous la forme de particules, de fibres, de filet ou de film poreux sur la surface de la couche microporeuse thermorésistante, la couche microporeuse thermorésistante comprenant au moins une résine thermorésistante choisie dans le groupe constitué des polyimide, polyamideimide, aramide, polycarbonate, polyacétal, polysulfone, poly(sulfure de phényl), polyétheréthercétone, polyester aromatique, polyéthersulfone et polyétherimide, et où l'espaceur comprend une substance électrochimiquement stable qui n'est pas dégradée après avoir été retenue en appliquant une tension de 4,2 à 4,5 V, et où l'épaisseur de l'espaceur est de 0,02 à 5 $\mu$m.

**2.** Séparateur pour une batterie secondaire à électrolyte non aqueux selon la revendication 1, dans lequel la substance électrochimiquement stable est un polymère organique électrochimiquement stable, ou un polymère organique électrochimiquement stable contenant un composé inorganique électrochimiquement stable.

**3.** Séparateur pour une batterie secondaire à électrolyte non aqueux selon la revendication 1, dans lequel l'espaceur est sous la forme de particules et le diamètre des particules est de 3 $\mu$m ou moins.

**4.** Séparateur pour une batterie secondaire à électrolyte non aqueux selon la revendication 1, dans lequel l'espaceur est formé par enduction d'un liquide d'application contenant une substance électrochimiquement stable sur la surface de la couche microporeuse thermorésistante.

**5.** Séparateur pour une batterie secondaire à électrolyte non aqueux selon la revendication 4, dans lequel le liquide d'application est une suspension.

**6.** Séparateur pour une batterie secondaire à électrolyte non aqueux selon la revendication 1 ou 2, dans lequel la substance électrochimiquement stable est un polymère organique choisi dans le groupe constitué d'une polyoléfine, un copolymère de polyoléfine, un polymère contenant du fluor, un polycarbonate, un polyester aromatique, un polyéthylène-téréphtalate et une cellulose.

**7.** Batterie secondaire à électrolyte non aqueux comprenant le séparateur pour une batterie à électrolyte non aqueux selon l'une quelconque des revendications 1 à 6.

**8.** Batterie secondaire à électrolyte non aqueux selon la revendication 7, dans laquelle l'espaceur est adjacent à une cathode.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11144697 A